# EUROPÄISCHE PATENTSCHRIFT

(11) **EP 1 344 690 B1**
(45) Veröffentlichungstag und Bekanntmachung des Hinweises auf die Patenterteilung: **04.01.2006**
(21) Anmeldenummer: 03450046.2
(22) Anmeldetag: 18.02.2003
(51) Int. Cl.: B60R 21/02, B60J 7/22, B60R 13/08

(54) **Kraftfahrzeug mit mobiler Trennwand**
Motor vehicle with a movable partition wall
Véhicule automobile à paroi de séparation mobile

(30) Priorität: 14.03.2002 AT 1572002 U
(43) Veröffentlichungstag der Anmeldung: 17.09.2003
(73) Patentinhaber: Magna Steyr Fahrzeugtechnik AG & Co KG, 8041 Graz (AT)
(72) Erfinder: Grasser, Peter, Dipl.-Ing., 8130 Frohnleiten (AT); Kober, Eduard, 8160 Weiz (AT); Woeckl, Werner, 8041 Graz (AT)
(74) Vertreter: Kovac, Werner

(56) Entgegenhaltungen:
- DE-A- 10 039 789
- DE-U- 20 011 100
- GB-A- 1 580 454

## Beschreibung

Die Erfindung betrifft ein Kraftfahrzeug, in dessen Passagierraum eine mobile Trennwand vorgesehen ist, die in trennender Stellung vom Boden des Passagierraumes so aufragt, dass deren Seitenränder den Seitenwänden des Passagierraumes zugewandt sind. Solche Trennwände sind in sogenannten Kombi-Kraftwagen und Sport-Nutzfahrzeugen (kurz "SUV"), welche in einen Wagen mit geschlossener oder offener Ladefläche (letztere werden in Amerika "pick-up" genannt) verwandelbar sind.

Ein Kraftfahrzeng mit den Merkmalen des Oberbegriffs des Anspruchs 1 ist aus GB-A-1 580 454 bekannt.

Bei der Verwandlung wird mindestens für langes Ladegut die Heckklappe geöffnet, meist aber auch ein Teil des Daches abgenommen. Die Trennwand ist dann in Gebrauchsstellung hinter den Fahrersitzen aufgestellt, um den Fahrer und Beifahrer zu schützen, etwa vor vorrutschender Ladung oder vor dem Fahrtwind. Die Trennwand ist im Nichtgebrauchs-Zustand irgendwo im Fahrzeug verstaut: an der Innenseite des Daches, oder sie bildet selbst einen herunterklappbaren Teil des Daches, oder sie liegt am Boden des Innenraumes. Jedenfalls ist es meist unmöglich, die Kontur der Trennwand so zu gestalten, dass sie an der im allgemeinen geneigten und gewölbten Innenkontur der Seitenwände anliegt. Ergo muss sie schmäler als der Abstand zwischen den beidseitigen Seitenwänden sein, es bleibt ein Streifen offen. Die Trennwand bietet daher keinen ausreichenden Schutz vor Witterungseinflüssen, Fahrtwind und Schmutz, womöglich auch vor Diebstahl. Eine wirksame Klimatisierung des vorderen Innenraumes ist so auch nicht möglich.

Es ist daher Ziel der Erfindung, eine mobile und trotzdem dichte Abtrennung zwischen Passagierraum und Laderaum zu schaffen.

Dazu ist erfindungsgemäß mindestens eine Abschottungstafel vorgesehen, die im Nichtgebrauchs-Zustand ungefähr horizontal abgelegt und im Gebrauchszustand um eine eine Scharnierlinie bildende Kante aufwärts geklappt ist, sodass von deren Seitenkanten die eine an der Trennwand und die andere an der Seitenwand anliegt. In der Praxis wird die Abschottungstafel wohl auf beiden Seiten des Fahrzeuges vorgesehen sein. So überbrückt sie den nicht getrennten Streifen zwischen der Trennwand und der Seitenwand. Da sie über die Scharnierlinie mit dem Boden oder mit der Rückenlehne eines Sitzes verbunden ist, kann sie weder verrutschen noch verlorengehen. Wenn ihre Kontur entsprechend gewählt ist, wird sie einfach hochgeklappt und liegt mit ihren beiden Seitenkanten an.

Dabei ist es vorteilhaft, die eine Scharnierlinie bildende Kante der Abschottungstafel im Grundriss zur Trennwand und zur Seitenwand geneigt zu legen (Anspruch 2). Die drei Linien im Grundriss bilden somit ein ungefähr rechtwinkeliges Dreieck mit der Scharnierlinie als Hypothenuse. Wenn im Idealfall das Dreieck auch gleichschenkelig ist, liegen die Seitenkanten der Abschottungstafel unter einem Winkel von 45 Grad an der Seitenwand und an der Trennwand an.

In Weiterbildung der Erfindung sind die Seitenkanten der Abschottungstafel mit einer Dichtung versehen, sodass sie sich im Gebrauchszustand an der Trennwand und an der Seitenwand dichtend anlegen (Anspruch 3).

Da die Seitenwand des Fahrzeuges in der Regel geneigt und gekrümmt ist, besteht die Abschottungstafel in einer bevorzugten Ausführungsform aus einzelnen Teiltafeln, die ebenfalls bezüglich einer benachbarten Teiltafel um eine eine Scharnierlinie bildende Kante in Gebrauchsstellung klappbar sind (Anspruch 4). Sie sind also in Nichtgebrauchsstellung zusammenfaltbar. Die einzelnen Teiltafeln sind dann geeignet bemessene Dreiecke oder Trapeze, die mittels Scharnierlinien mit einer benachbarten Teiltafel beweglich verbunden sind.

So ist es meist zu erreichen, dass die Abschottungstafel beziehungsweise die oder einzelne Teiltafeln eben (Anspruch 5) sind. Das macht sie billig in der Herstellung und leicht verstaubar. Besonders praktisch ist es, die Abschottungstafel im Nichtgebrauchs-Zustand in einer Mulde im Boden des Passagierraumes oder des Gepäckraumes (Anspruch 6) oder in der Rückenlehne eines Sitzes an deren Rückseite (Anspruch 7) )versenken zu können.

Im folgenden wird die Erfindung anhand von Abbildungen beschrieben und erläutert. Es stellen dar:
- Fig. 1:: Den Blick ins Innere eines erfindungsgemäßen Fahrzeuges,
- Fig. 2:: ein Detail daraus in einer ersten Stellung,
- Fig. 3:: ein Detail daraus in einer zweiten Stellung,
- Fig. 4:: ein Detail daraus in einer dritten Stellung,
- Fig. 5:: eine vereinfachte Variante,
- Fig. 6:: einen Längsschnitt nach VI-VI in Fig 1,
- Fig. 7:: einen Längsschnitt nach VI-VI in Fig 1, in einer Variante,
- Fig. 8:: Detail VI in Fig. 3.

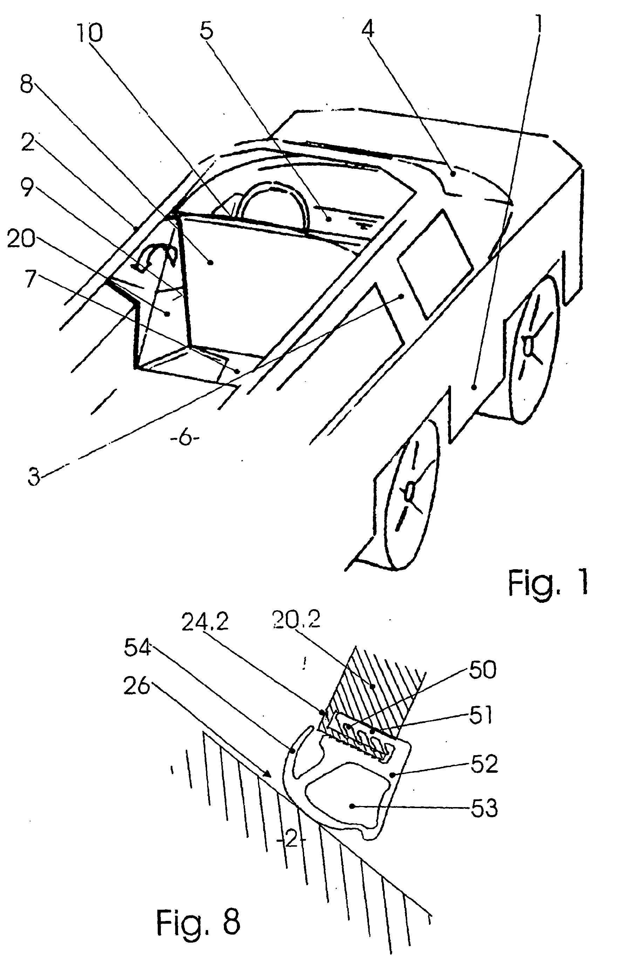

In **Fig. 1** ist ein erfindungsgemäßes Kraftfahrzeug 1 grob angedeutet, sein Heck ist weggelassen. Man sieht eine linke Seitenwand 2, eine rechte Seitenwand 3 und eine Windschutzscheibe 4. Hinter dieser befindet sich zuerst ein Passagierraum 5 für Fahrer und Beifahrer und dann, weiter hinten, ein Laderaum 6. Dieser hat einen Boden 7 und ist von dem Passagierraum 5 durch eine Trennwand 8 separiert. Diese Trennwand ist hier eben und man sieht einen der linken Seitenwand zugewandten linken Seitenrand 9 und einen oberen Rand 10, der ungefähr der Dachkontur folgt. Die Trennwand 8 kann herausnehmbar, umlegbar oder vom hier weggelassenen Dach aus hinuntergeschwenkt sein. Eine Abschottungstafel 20 ist hier nur angedeutet.

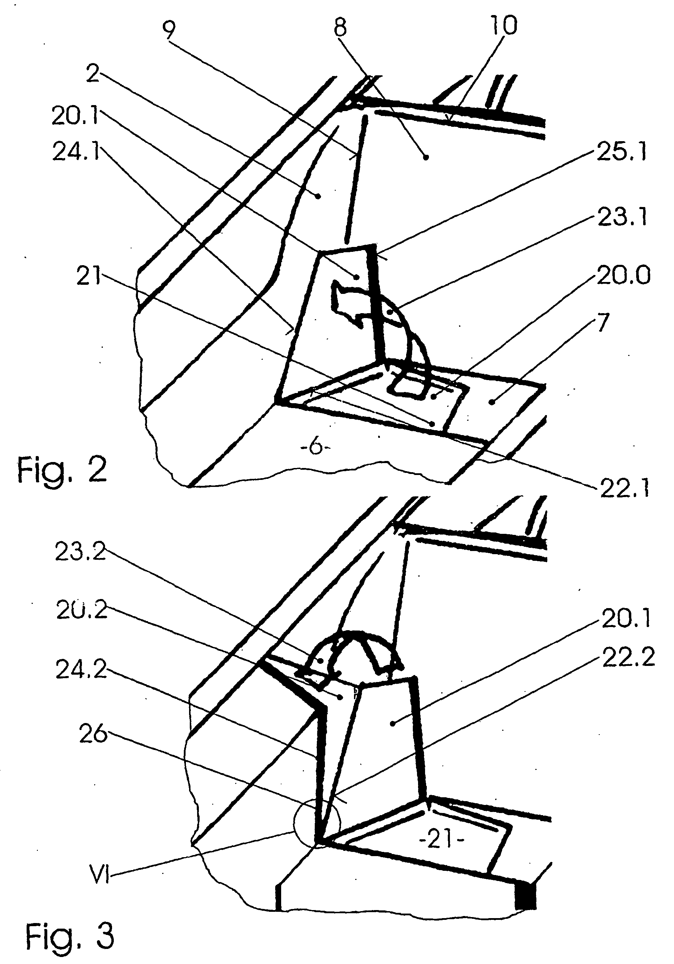

In **Fig. 2** muß man sich die Abschottungstafel 20 zunächst im Nichtgebrauchs-Zustand 20.0, von einer Mulde 21 im Boden 7 des Laderaumes oder in einem Sitz aufgenommen, vorstellen. Aus dieser wird sie um eine erste Scharnierlinie 22.1 entsprechend dem Pfeil 23.1 hochgeklappt. Ihre linke Seitenkante 24.1 hängt noch in der Luft *liegt an der linken Seitenwand 2* und ihre rechte Seitenkante 25.1 liegt an der Trennwand 8 an. Die linke Seitenwand 2 ragt hier wegen des Radkastens noch weit in den Innenraum des Fahrzeuges, deshalb besteht die Abschottungstafel 20 hier aus mehreren Teilen. Der bereits aufwärts geklappte Teil 20.1 kann nur einem Teil der Seitenwand folgen, es müssen weitere Teile über dem Radkasten ausgeklappt werden.

In **Fig. 3** wird daher ein zweiter Teil 20.2 der Abschottungstafel um eine zweite Scharnierlinie 22.2, dem Pfeil 23.2 folgend ausgeschwenkt. Nun kann seine Seitenkante 24.2 der Kontur über dem Radhaus nach aussen folgen. Diese Seitenkante 24.2 ist mit einer Dichtung 26 versehen, ebenso wie die in Fig. 2 mit einer besonders dicken Linie angedeutete Seitenkante 25.1.

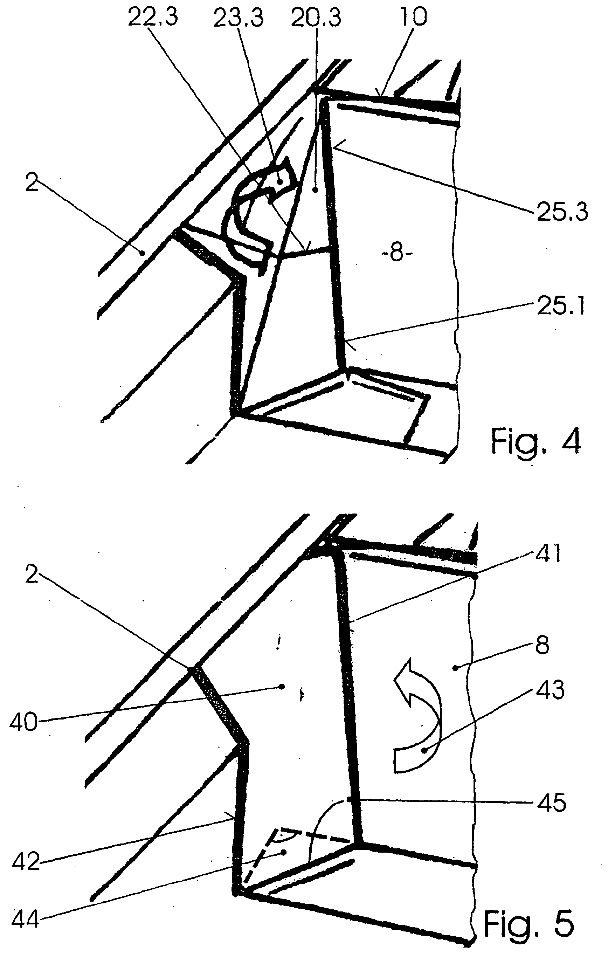

In **Fig. 4** wird schließlich noch ein dritter Teil 20.3 der Abschottungstafel um eine dritte Scharnierlinie 22.3 gemäß dem Pfeil 23.3 aufwärts geklappt, damit ist auch der obere Teil der Seitenwand 2 bis hinauf zu deren oberem Rand 10 mit der Trennwand 8 und mit der Seitenwand 2 verbunden, und so weiter, bis der gesamte Spalt zwischen Trennwand und Seitenwand geschlossen ist.

In der einfachen Ausführungsform der **Fig. 5** ist nur eine einzige Abschottungstafel 40 vorhanden. Dank der einfach geformten Seitenwand 2 genügt hier eine einzige ebene Tafel, die gemäß dem Pfeil 43 aus ihrem Nichtgebrauchs-Zustand emporgeschwenkt wird. Ihre Seitenkanten 41 und 42 sind beide mit Dichtungen bewährt und liegen, die eine an der Seitenwand 2, die andere an der Trennwand 8 an. Strichliert ist hier noch das rechtwinkelige Dreieck 44 eingezeichnet, das die Richtung der Scharnierlinie 45 zum Grundriß der Seitenwand 2 und der Trennwand 8 zeigt.

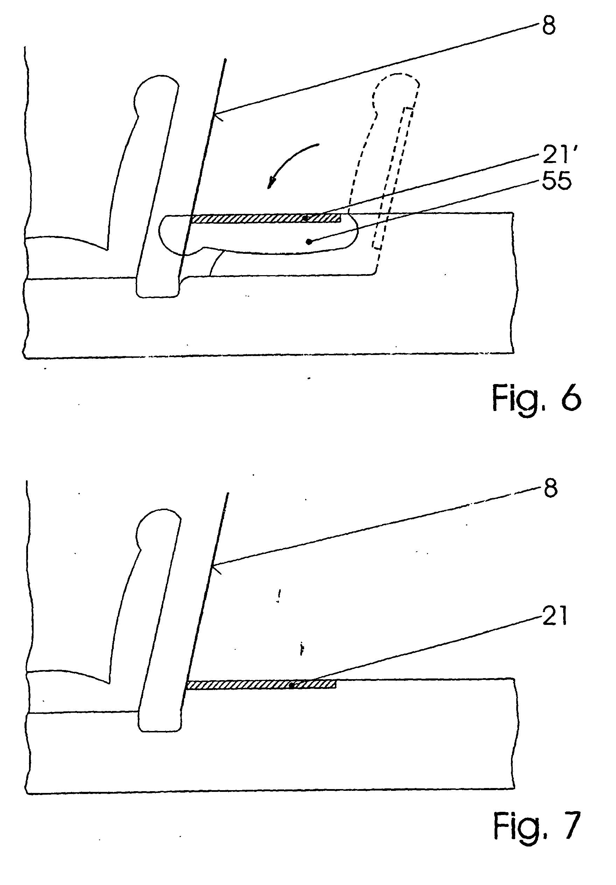

In **Fig. 6** und in **Fig. 7** ist in zwei Varianten die Unterbringung der gefalteten Abschottungstafel in einer Mulde gezeigt; einmal (Fig. 7) in einer Mulde 21 im Boden des Fahrzeuges beziehungsweise dessen Ladefläche; das andere Mal (Fig. 6) in einer Mulde 21' in der Rückenlehne 55 eines Rücksitzes, und zwar an dessen Hinterseite, sodass die Mulde bei umgeklappter Rückenlehne ungefähr horizontal ist und die Abschottungstafel nur bei umgelegter Lehne aufgeklappt werden kann.

**In Fig. 8** ist die Abdichtung zwischen der Abschottungstafel 20.2 und der Seitenwand 2 beispielhaft (die anderen Dichtungen gleichen ihnen) im Detail dargestellt. Die Abschottungstafel 20.2 hat an ihrem Rand 24.2 eine Nut 50, in die ein Rippensteg 51 der schlauchförmigen Dichtung 26 eingedrückt und festgehalten ist. An den Rippensteg schließt, etwa verstärkt durch eine nicht sichtbare Metallseele ein Schlauchquerschnitt 52 an, der einen luftgefüllten Hohlraum 53 bildet und eine sporenförmige Gleitrippe 54 hat. Damit liegt die Dichtung 26 an der Seitenwand 2 an. Der schlauchförmige Profilteil sorgt für ausreichenden Anpressdruck bei guter Anschmiegung der Dichtung 26 an Unebenheiten der Seitenwand 2.

Auf diese Weise ist der Passagierraum 5 wirksam, das heißt luftdicht, von der dahinter liegenden Ladefläche getrennt. Zum Umbau braucht die mehrteilige Abschottungstafel nur wieder wie ein Spielbrett entlang der diversen Schamierlinien zusammengefaltet und in die Mulde 21 im Boden versenkt zu werden.

## Patentansprüche

1. Kraftfahrzeug in dessen Passagierraum eine mobile Trennwand (8) vorgesehen ist, die in trennender Stellung vom Boden (7) des Passagierraumes so aufragt, dass deren Seitenränder (9) den Seitenwänden (2) des Passagierraumes benachbart sind, **dadurch gekennzeichnet, dass** mindestens eine Abschottungstafel (20; 40) vorgesehen ist, die im Nichtgebrauchs-Zustand ungefähr horizontal abgelegt und im Gebrauchszustand um eine eine Scharnierlinie (22.1) bildende Kante aufwärts geklappt ist, sodass von deren Seitenkanten (24.1, 25.1) eine an der Trennwand (8) und eine an der Seitenwand (2) anliegt.

2. Kraftfahrzeug nach Anspruch 1, **dadurch gekennzeichnet, dass** die eine Scharnierlinie (22.1; 45) bildende Kante der Abschottungstafel (20.1; 40) im Grundriss mit der Trennwand (8) und der Seitenwand (2,3) ein angenähert rechtwinkeliges Dreieck (44) bildet.

3. Kraftfahrzeug nach Anspruch 1, **dadurch gekennzeichnet, dass** die Seitenkanten (24.1, 25.1; 41,42) der Abschottungstafeln (20.1; 40) mit einer Dichtung (26) versehen sind, sodass sie sich im Gebrauchszustand an der Trennwand (8) und an der Seitenwand (2,3) dichtend anlegen.

4. Kraftfahrzeug nach Anspruch 1, **dadurch gekennzeichnet, dass** die Abschottungstafel (20) aus einzelnen Teiltafeln (20.1, 20.2, 20.3) besteht, die ebenfalls um eine eine Scharnierlinie (22.1, 22.2, 22.3) bildende Kante in Gebrauchsstellung klappbar sind.

5. Kraftfahrzeug nach Anspruch 1, **dadurch gekennzeichnet, dass** die Abschottungstafel (20; 40) beziehungsweise die oder einzelneTeiltafeln (20.1, 20.2, 20.3) eben sind.

6. Kraftfahrzeug nach Anspruch 1, **dadurch gekennzeichnet, dass** die Abschottungstafel (20, 40) beziehungsweise deren Teile (20.1, 20.2, 20.3) im Nichtgebrauchs-Zustand in einer Mulde (21) im Boden (7) des Passagierraumes (6) versenkbar ist.

7. Kraftfahrzeug nach Anspruch 1, **dadurch gekennzeichnet, dass** die Abschottungstafel im Nichtgebrauchs-Zustand in einer Mulde (21') liegt, die in der Rückenlehne eines Sitzes an deren Rückseite vorgesehen ist.

## Claims

1. A motor vehicle, in the passenger space of which is provided a movable dividing wall (8), which, in the dividing position, projects from the floor (7) of the passenger space in such a way that its side edges (9) are adjacent to the side walls (2) of the passenger space, **characterised in that** at least one compartmentalisation panel (20; 40) is provided, which, in the condition of non-use, is disposed approximately horizontally, and which, in the condition of use, is folded up over an edge which forms a hinge line (22.1), so that of its side edges (24.1, 25.1) one rests against the dividing wall (8) and one rests against the side wall (2).

2. A motor vehicle according to Claim 1, **characterised in that** the edge, which forms a hinge line (22.1; 45) of the compartmentalisation panel (20.1; 40) forms in plan an approximately right-angled triangle (44) with the dividing wall (8) and the side wall (2, 3).

3. A motor vehicle according to Claim 1, **characterised in that** the side edges (24.1, 25.1; 41, 42) of the compartmentalisation panel (20.1; 40) are provided with a seal (26), so that in the condition of use they rest sealingly against the dividing wall (8) and against the side wall (2, 3).

4. A motor vehicle according to Claim 1, **characterised in that** the compartmentalisation panel (20) consists of individual panel portions (20.1, 20.2, 20.3) which likewise in the position of use can be folded over an edge which forms a hinge line (22.1, 22.2, 22.3).

5. A motor vehicle according to Claim 1, **characterised in that** the compartmentalisation panel (20; 40), or the panel portions or individual panel portions (20.1, 20.2, 20.3) are flat.

6. A motor vehicle according to Claim 1, **characterised in that** the compartmentalisation panel (20, 40), or the parts (20.1, 20.2, 20.3) thereof, in the condition of non-use, can be lowered into a cavity (21) in the floor (7) of the passenger space (6).

7. A motor vehicle according to Claim 1, **characterised in that** in the condition of non-use the compartmentalisation panel lies in a cavity (21') which is provided in the rear side of the back rest of a seat.

## Revendications

1. Véhicule automobile dans l'habitacle duquel est prévue une cloison (8) qui, en position de séparation, s'élève à partir du plancher (7) de l'habitacle de telle manière que ses arêtes latérales (9) sont adjacentes aux parois latérales (2) de l'habitacle, **caractérisé en ce qu'**est prévu au moins un panneau de cloisonnement (20 ; 40) qui est disposé sensiblement à l'horizontale en cas de non utilisation, et qui est relevé vers le haut en pivotant autour d'une arête formant une ligne de charnière (22.1) en cas d'utilisation, de sorte que ses arêtes latérales (24.1, 25.1) reposent l'une contre la cloison (8) et l'autre contre la paroi latérale (2).

2. Véhicule automobile selon la revendication 1, **caractérisé en ce que** l'arête du panneau de cloisonnement (20.1 ; 40) formant la ligne de charnière (22.1 ; 45) forme en projection avec la cloison (8) et la paroi latérale (2, 3) à peu près un triangle rectangle (44).

3. Véhicule automobile selon la revendication 1, **caractérisé en ce que** les arêtes latérales (24.1, 25.1 ; 41,42) des panneaux de cloisonnement (20.1 ; 40) sont équipées d'un joint d'étanchéité (26), de sorte qu'en cas d'utilisation, elles reposent de manière étanche contre la cloison (8) et contre la paroi latérale (2, 3).

4. Véhicule automobile selon la revendication 1, **caractérisé en ce que** le panneau de cloisonnement (20) est composé de parties individuelles de panneau (20.1, 20.2, 20.3) qui peuvent également être déployées en cas d'utilisation en pivotant autour d'une arête formant une ligne de charnière (22.1, 22.2, 22.3).

5. Véhicule automobile selon la revendication 1, **caractérisé en ce que** le panneau de cloisonnement (20 ; 40) et/ou les parties individuelles de panneau (20.1, 20.2, 20.3) sont plats.

6. Véhicule automobile selon la revendication 1, **caractérisé en ce que** le panneau de cloisonnement (20 ; 40) et/ou ses parties (20.1, 20.2, 20.3) peuvent être escamotés dans une cavité (21) prévue dans le plancher (7) de l'habitacle (6)en cas de non utilisation.

7. Véhicule automobile selon la revendication 1, **caractérisé en ce qu'**en cas de non utilisation, le panneau de cloisonnement se trouve dans une cavité (21') qui est prévue dans le dossier d'un siège, sur sa face arrière.
